# EUROPÄISCHE PATENTSCHRIFT

(11) **EP 1 569 814 B1**
(45) Veröffentlichungstag und Bekanntmachung des Hinweises auf die Patenterteilung: **07.03.2007**
(21) Anmeldenummer: 03789229.6
(22) Anmeldetag: 11.12.2003
(51) Int. Cl.: B60K 37/00, B60H 1/00

(54) **WANDSTRUKTUR UND VERFAHREN ZU DEREN HERSTELLUNG**
WALL STRUCTURE AND METHOD FOR THE PRODUCTION THEREOF
STRUCTURE DE PAROI ET SON PROCEDE DE PRODUCTION

(30) Priorität: 11.12.2002 DE 10258705
(43) Veröffentlichungstag der Anmeldung: 07.09.2005
(73) Patentinhaber: Faurecia Innenraum Systeme GmbH, 76767 Hagenbach (DE)
(72) Erfinder: BOEHM, Markus, 76571 Gaggenau (DE)
(74) Vertreter: Pfenning, Meinig & Partner GbR
(86) Internationale Anmeldenummer: PCT/EP2003/014085
(87) Internationale Veröffentlichungsnummer: WO 2004/052675

(56) Entgegenhaltungen:
- WO-A-02/38411
- DE-A- 3 806 783
- DE-A- 10 135 613
- DE-C- 19 822 113
- US-A- 5 967 598
- US-A- 6 110 037
- US-B1- 6 217 438

## Beschreibung

Die vorliegende Erfindung betrifft eine Wandstruktur sowie ein Verfahren zu deren Herstellung.

Eine solche Wandstruktur bietet sich insbesondere für Instrumententafeln von Kraftfahrzeuginnenräumen an. Bekannte Instrumententafeln sind regelmäßig aus einem relativ festen Kunststoffträger hergestellt, auf welchem zum Gewährleistung einer besseren Haptik bzw. Sicherheit eine Schaumschicht fahrerraumseitig aufgebracht ist, welche von einer Dekorschicht bedeckt ist.

Besonders bei starker Sonneneinstrahlung stellt sich das Problem dar, dass die meist dunkle (oft schwarze) Dekorfläche der Instrumententafel sich sehr stark aufheizt. Dies kann sogar dazu führen, dass es bei Berührung zu Verbrennungen von Insassen kommt, außerdem gibt sich hierdurch eine sehr hohe Innenraumlufttemperatur im Fahrzeuginnenraum.

Zur Entschärfung dieser Probleme ist vorgeschlagen worden, z.B. im Stand arbeitende Klimaanlagen, welche z.B. über Solarzellen im Schiebedach betrieben werden, vorzusehen, um auf diese Weise eine Abkühlung des Fahrzeuginnenraumes sowie der Dekoroberflächen zu erreichen.

DE 3 806 783 offenbart eine Wandstruktur nach dem Oberbegriff des Anspruchs 1 bzw ein Verfahren zur deren Herstellung.

Nachteilig ist hieran jedoch, dass bei dieser Kühlung die Klimaanlage sehr großvolumig dimensioniert sein muss, um eine wirksame Abkühlung, insbesondere der Dekoroberflächen zu erreichen.

Ausgehend von diesem Stand der Technik liegt der vorliegenden Erfindung die Aufgabe zugrunde, eine Wandstruktur bzw. ein Verfahren zu deren Herstellung zu schaffen, eine effizientere Temperierung einer Dekoroberfläche bzw. des Fahrzeuginnenraums ermöglicht.

Diese Aufgabe wird durch eine Wandstruktur nach Anspruch 1 bzw. für das Herstellungsverfahren durch Anspruch 12 gelöst.

Dadurch, dass bei einer erfindungsgemäßen Wandstruktur diese aus einer Schichtung von Oberschicht, Hohlraumschicht und Unterschicht besteht, wobei die Oberschicht zum Kraftzeuginnenraum hin orientiert ist und die Hohlraumschicht so an ein Belüftungssystem angeschlossen ist, dass Wärmeenergie mittels Luftstrom aus der Oberschicht ableitbar oder zu dieser zuführbar ist und die Oberschicht eine zur Hohlraumschicht hin angrenzende luftdurchlässige Trennschicht aufweist, wird diese Aufgabe gelöst.

Auf diese Weise kann die Temperatur in der Oberschicht, insbesondere auf der zu einem Fahrzeuginnenraum hin gewandten Seiten der Oberschicht, besonders effizient reguliert werden. Es muss nicht, wie bei üblichen Belüftungssystemen, über die Kühlung bzw. Erwärmung der Luft im gesamten Fahrzeuginnenraum eine "mittelbare" Abkühlung bzw. Erwärmung der Oberschicht erreicht werden. Statt dessen wird durch direkte Ankopplung der Hohlraumschicht, welche von warmer bzw. kalter Luft durchströmt wird, eine viel großflächigere und somit schnelle bzw. wirkungsgradbessere Temperaturregelung erreicht. Dies kann dazu führen, dass bereits nach wenigen Sekunden der Luftumwälzung eine merkbare Temperaturerhöhung bzw. -senkung der Oberschicht gegeben ist. So ist z.B. auch denkbar, dass beim funkbetätigten Öffnen des Fahrzeugs die Belüftungsanlage in Gang gesetzt wird und, da die z.B. Abkühlung recht schnell erfolgt, beim ersten Berühren der Instrumententafel durch einen Fahrzeuginsassen eine Abkühlung der Oberschicht insoweit erfolgt ist, dass eine Verbrennung ausgeschlossen werden kann.

Der korrespondierende Herstellungsverfahrensanspruch sieht vor, dass Unter- und Oberschicht voneinander beabstandet so miteinander verbunden werden, dass zwischen diesen eine Hohlraumschicht zur Luftführung verbleibt, welche an ein oben beschriebenes Belüftungssystem angeschlossen werden kann, wobei eine zur Oberschicht gehörende luftdurchlässige Trennschicht derart angeordnet wird, dass diese zur Hohlraumschicht hin angrenzend ist.

Vorteilhafte Weiterbildungen der Erfindung werden in den abhängigen Ansprüchen angegeben.

Eine besonders vorteilhafte Weiterbildung sieht vor, dass die Oberschicht aus einer Schichtung von Oberflächenschicht, Schaumschicht sowie der Hohlraumschicht hin angrenzenden Trennschicht besteht.

Hierbei dient die Oberflächenschicht dem Abschluss zum Kraftfahrzeuginnenraum hin. Diese kann beliebig
- Weiter auf Seite 4 der ursprünglichen Fassung - ausgeführt sein, z.B. als Kunststoff-Slushhaut, Kunststoff-Gießhaut und/oder Leder bzw. textilen Materialien.

Die Schaumschicht hat hierbei die Aufgabe, für Fahrzeuginsassensicherheit bzw. angenehme Haptik zu sorgen, die Schaumschicht sollte im Sinne einer möglichst guten Temperaturweiterleitung direkt mit der Oberflächenschicht verbunden sein. Für die Schaumschicht bieten sich verschiedene Materialien an. So ist z.B. möglich, üblichen Polyurethan-Schaum zu verwenden. Es ist aber besonders vorteilhaft, sehr gut wärmeleitenden und gleichzeitig "weichen" Schaum zu verwenden. Hierbei bietet sich auch poröses, expandiertes Polyolefin, z.B. Polypropylen an, welches gasdurchlässig ist und so eine bessere Durchlüftung der Schaumschicht sowie einen dadurch gegebenen besseren Wärmeaustausch zur Oberflächenschicht hin ermöglicht.

Die an die Schaumschicht angrenzende Trennschicht kann aus Kunststoff und/oder Metall bestehen. Auch hier ist es wiederum günstig, einen möglichst guten Wärmeübergang dieser Grenzschicht vorzusehen, um somit die Wärme von der Oberflächenschicht besonders gut zur Hohlraumschicht hin weiterleiten zu können. Hierzu bietet es sich als weitere Verbesserung zusätzlich an, dass die Trennschicht luftdurchlässig ist. Hierbei wird insbesondere bei der oben beschriebenen porösen, luftdurchlässigen Schaumschicht erreicht, dass eine noch bessere Strömung der Oberflächenschicht gegeben ist.

Die Trennschicht kann auf verschiedene Weisen ausgeführt sein. So ist es z.B. möglich, dass eine durchgehende Kunststoff- bzw. Metalltrennschicht Perforationen aufweist, welche vor bzw. nach dem Verbinden der Trennschicht mit der Schaumschicht eingebracht werden. Selbstverständlich ist es auch möglich, von vornherein gelochte Trennschichten vorzusehen. Eine Variante hierzu sieht vor, dass die Trennschicht einen Rahmen aus Kunststoff vorsieht, in welchen zum Beispiel Metallsiebe eingesetzt werden (selbstverständlich ist auch die umgekehrte Materialpaarung möglich).

Es ist besonders vorteilhaft, dass Ober- und Unterschicht durch Stege verbunden sind, welche somit die Abmessungen der Hohlraumschicht definieren. Neben dieser Beabstandungsfunktion für die Ober- sowie die Unterschicht dienen diese Stege in der Hohlraumschicht auch der Luftführung.innerhalb der Hohlraumschicht. Die Stege können integral mit der Trennschicht oder integral mit der Unterschicht verbunden sein und später mit der jeweils anderen Schicht verklebt bzw. geschweißt werden. Selbstverständlich ist es auch möglich, einzelne Stegelemente bzw. einen Stegrahmen beidseitig mit Ober- sowie Unterschicht zu verbinden.

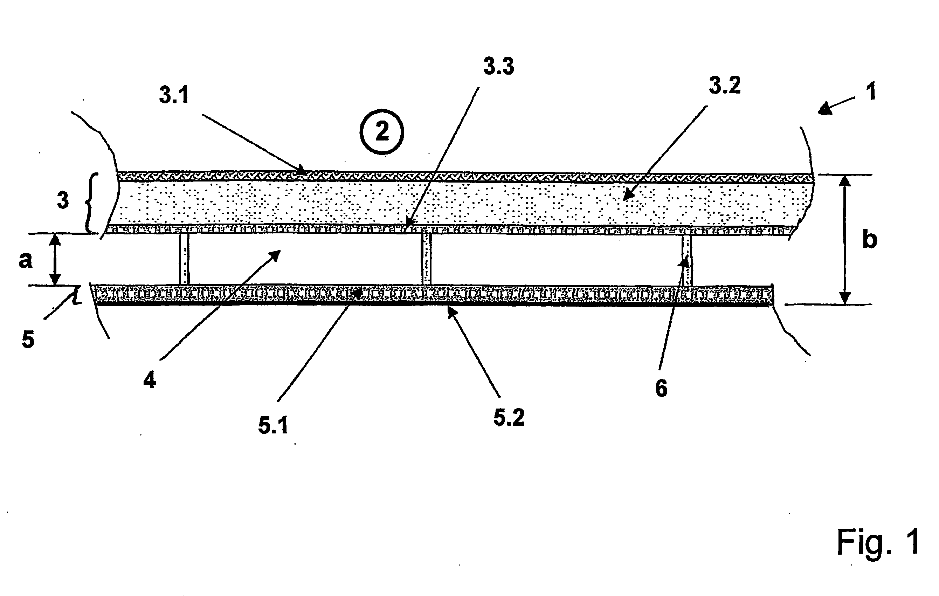

Die Hohlraumschicht ist über Zuleitungen an ein Belüftungssystem des Kraftfahrzeugs, vorzugsweise eine Klimaanlage des Kraftfahrzeugs, angeschlossen. Die Dicke der Hohlraumschicht sollte so bemessen sein, dass der Luftwiderstand nicht zu hoch ist. So bietet es sich an, dass einer Gesamtdicke der Wandstruktur von ca. 10 mm die Hohlraumschicht eine Ausdehnung von 4 mm senkrecht zur Wandstrukturebene aufweist. Vorzugsweise beträgt die Dicke der Wandstruktur (in Figur 1 mit "b" bezeichnet) 6 - 12 mm, die entsprechende Hohlraumschicht (in Figur 1 mit "a" bezeichnet) weist hierbei eine Dicke von 3 - 6 mm auf (diese Dicke ist jeweils gemessen senkrecht zur Ebene der Wandstruktur).

Die sich an die Hohlraumschicht auf der anderen Seite anschließende Unterschicht nimmt die eigentlichen "Trägeraufgaben", wie sie von herkömmlichen Instrumententafeln bekannt sind, wahr. Die Unterschicht besteht vorzugsweise aus Kunststoff, Holz und/oder Metall, ein möglicher Werkstoff ist auch z.B. ein GFK-Verbund-werkstoff.

In einer vorteilhaften Weiterbildung kann die Unterschicht auf ihrer von der Hohlraumschicht fortweisenden Seite mit einer Isolationsschicht bedeckt sein, um somit die Wandstruktur besser von externen Temperatureinflüssen abzuschotten, so dass eine direkte Regelung der Oberflächenschicht Wärmeabgabe durch die die Hohlraumschicht durchströmende Luft möglich ist. Als Isolationsschicht kommt vorzugsweise eine Metallfolie (z.B. Aluminiumfolie) zum Einsatz, selbstverständlich sind hier auch andere Materialien möglich.

Die erfindungsgemäße Wandstruktur bietet sich insbesondere für Instrumententafeln von Kraftfahrzeugen an. Selbstverständlich hat sie auch eine besondere Eignung für weitere Elemente in einem Kraftfahrzeuginnenraum, z.B. für einen Kraftfahrzeugboden, eine Decke des Kraftfahrzeugs, Seitenteile oder auch eine Stirnwand.

Bezüglich des erfindungsgemäßen Herstellungsverfahrens sind auch weitere vorteilhafte Weiterbildungen möglich.

Insbesondere bietet es sich an, dass die Oberschicht durch Ausschäumung des Bereichs zwischen einer Oberflächenschicht und einer Trennschicht (unter Bildung der Oberschicht) erfolgt, wobei Oberflächenschicht und Trennschicht vor dem Ausschäumungsvorgang beabstandet in einem Ausschäumungswerkzeug eingelegt werden. Hierdurch wird gewährleistet, dass eine besonders gute Wärmeleitung von der Schaumschicht zur Oberflächen- bzw. Trennschicht hin gewährleistet wird, da hier eine direkte Anschäumung gegeben ist. Anschließend kann dann z.B. auch eine Lochung der Trennschicht (sofern diese vorher nicht perforiert war) erfolgen.

Weitere vorteilhafte Weiterbildungen werden in den übrigen abhängigen Ansprüchen beschrieben.

Die Erfindung wird nun anhand mehrerer Figuren erläutert. Es zeigen:
- Fig. 1: einen Querschnitt durch eine erfindungsgemäße Wandstruktur,
- Fig. 2: eine Draufsicht auf eine erfindungsgemäße Trennschicht,
- Fig. 3: eine schematische Darstellung von Wärmeleitungsvorgängen innerhalb der Wandstruktur.

Fig. 1 zeigt eine erfindungsgemäße Wandstruktur 1 im Querschnitt. Es handelt sich hierbei um einen Teil einer Instrumententafel für Kraftfahrzeuge. Die Wandstruktur 1 ist eine Schichtung aus einer Oberschicht 3, einer Hohlraumschicht 4 sowie einer Unterschicht 5. Die Oberschicht 3 ist hierbei mit ihrer von Hohlraumschicht 4 wegweisenden Seite zum Kraftfahrzeuginnenraum 2 hin orientiert. Die Hohlraumschicht 4 ist an ein nicht dargestelltes Belüftungssystem des Kraftfahrzeugs angeschlossen, so dass Wärmeenergie mittels Luftstrom, welcher innerhalb der Hohlraumschicht geführt wird, aus der Obersicht ableitbar oder zu dieser zuführbar ist.

Die Oberschicht 3 besteht aus einer zu dem Kraftfahrzeuginnenraum hin weisenden Oberflächenschicht 3.1, sich einer hieran anschließenden Schaumschicht 3.2 sowie sich einer daran anschließenden Trennschicht 3.3.

Die Oberflächenschicht 3.1 ist als Kunststoff-Slushhaut ausgeführt. Die Schaumschicht 3.2 ist als Polyurethan-Schaumschicht ausgeführt. Die Trennschicht 3.3 ist eine perforierte Kunststofflage, wobei die Perforationen von der Hohlraumschicht zu der Schaumschicht 3.2 durchgehend sind zum Luftaustausch. Hierdurch wird der Wärmeübergang von der Schaumschicht 3.2 zur Hohlraumschicht 4 noch weiter verbessert. Die Hohlraumschicht 4 ist mit Luft gefüllt und weist Stege 6 auf, welche die Trennschicht 2 mit der Unterschicht 5 verbinden. Diese Stege sind im vorliegenden Fall integraler Bestandteil der Unterschicht 5 und mit der Trennschicht 3.3 durch Ultraschallschweißen verbunden. Selbstverständlich ist es auch möglich, dass die Stege als einzelner Rahmen vorgefertigt sind bzw. dass diese integraler Bestandteil der Trennschicht sind und erst später mit der Unterschicht 5 verbunden werden.

Generell ist anzustreben, dass die Hohlraumschicht 4 im allgemeinen senkrecht zur Wandstrukturebene eine gleichbleibende Ausdehnung, d.h. dass die einzelnen Schichten der Wandstruktur im wesentlichen parallel sind, um eine möglichst homogene Wärmezu- bzw. - abfuhr aufgrund gleichmäßiger Strömungsverhältnisse zu erreichen. Die Strömungsverhältnisse können außerdem durch den Verlauf der Stege 6 beeinflusst werden. Im vorliegenden Fall hat die Hohlraumschicht eine Dicke von 4 mm, während die gesamte Wandstruktur eine Dicke von 10 mm aufweist.

Die Unterschicht 5 besteht aus einem Kunststoff (GFK-Verbundwerkstoff), welcher mit 5.1 bezeichnet ist. Hieran schließt sich an der vom Fahrzeuginnenraum 2 hinfort weisenden Seite eine Isolationsschicht 5.2 aus Aluminiumfolie an. Durch diese Isolationsschicht wird Wärme- bzw. Kälteeinfluss von der vom Kraftfahrzeuginnenraum 2 wegweisenden Seite gemindert, so dass eine ungestörte Temperaturregelung im Kraftfahrzeuginnenraum bzw. auf der Oberflächenschicht 3.1 durch die Belüftung der Hohlraumschicht 4 erfolgen kann.

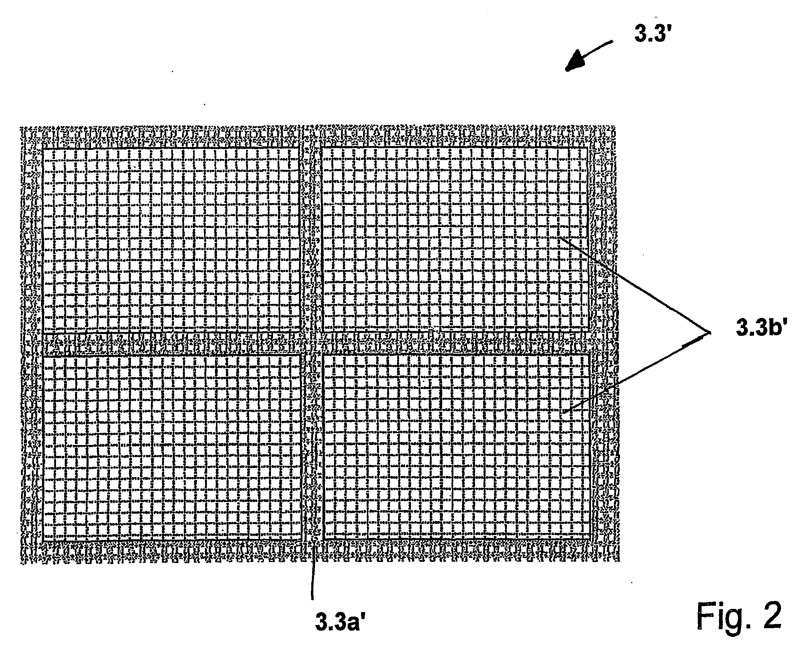

Fig. 2 zeigt ein Beispiel einer weiteren Ausführungsform einer Trennschicht 3.3. Hierbei handelt es sich um eine rahmenmäßige Anordnung aus Kunststoff 3.3 A', in welche vier Metallgitter 3.3 B' eingesetzt sind, welche ebenfalls luftdurchlässig sind.

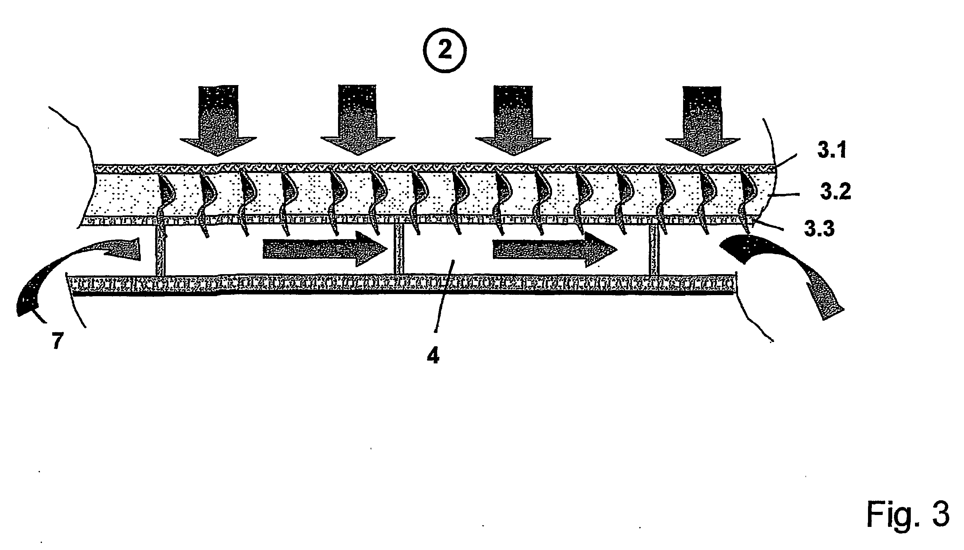

Fig. 3 zeigt die Verhältnisse bei der Wärmeabfuhr aus dem Kraftfahrzeuginnenraum 2. Hierbei ist gezeigt, wie zu der Oberflächenschicht 3.1 hingeführte Wärme (dargestellt mit vier breiten Pfeilen, welche auf 3.1 hinzeigen) zunächst in die Schaumschicht 3.2 abgeleitet werden und von dort aus über die Trennschicht 3.3 hin die Hohlraumschicht 4. Dies geschieht durch Zuführung von Kaltluft 7, welche einen Temperaturgradienten (von der Oberflächenschicht 3.1 zur Hohlraumschicht 4 hin abfallend) erzeugt. Hierdurch erwärmt sich die durch die Hohlraumschicht durchgeführte, anfangs kalte, Luft; entsprechend wird jedoch auch die Wärme aus dem Kraftfahrzeuginnenraum 2 bzw. der Oberflächenschicht 3.1 abgeleitet.

Es ist selbstverständlich, dass bei Umkehrung des Temperaturgradienten auch eine "Wandstrukturheizung" vorgesehen werden kann.

Die Wandstruktur 1 ist vorzugsweise Teil einer Instrumententafel, sie kann jedoch Teil eines Bodens, einer Decke, von Seitenteilen oder von einer Stirnwand eines Kraftfahrzeuges sein.

Zum Herstellen der erfindungsgemäßen Wandstruktur werden üblicherweise Unterschicht 5 und Oberschicht 3 voneinander beabstandet so miteinander verbunden, dass zwischen diese eine - vorzugsweise gleichbleibend dicke - Hohlraumschicht 4 zur Luftführung verbleibt. Die Beabstandung erfolgt hierbei durch zu der Ober- und/oder Unterschicht gehörende Stege 6.

Im vorliegenden Fall wurde die Oberschicht 3 zunächst durch Ausschäumung des Bereichs zwischen einer Oberflächenschicht 3.1 und einer Trennschicht 3.3 hergestellt. Hierbei wurde durch Abstandshalter gesichert, dass Oberflächen- und Trennschicht vor dem Ausschäumungsvorgang beabstandet in einem Ausschäumungswerkzeug eingelegt wurden. Anschließend wurde die Trennschicht 3.2 mit Perforationen versehen, welche bis zu der Schaumschicht 3.2 hin offen waren. Im Anschluss hieran wurde eine.bereits vorgefertigte Unterschicht 3, welche integrale Stege 6 aufwies, im Bereich der von der Unterschicht fortweisenden Stegenden mit der Trennschicht 3.3 ultraschallgeschweißt und auf diese Weise fest verbunden, so dass die erfindungsgemäße Wandstruktur 1 entstand.

Die vorliegende Erfindung betrifft also eine Wandstruktur, insbesondere zur Verwendung als Instrumententafel für Kraftfahrzeuginnenräume, wobei diese aus einer Schichtung von Oberschicht, Hohlraumschicht und Unterschicht besteht, wobei die Oberschicht zum Kraftfahrzeug-Innenraum hin orientiert ist und die Hohlraumschicht so an ein Belüftungssystem angeschlossen ist, dass Wärmeenergie mittels Luftstrom aus der Oberschicht ableitbar oder zu dieser zuführbar ist. Hierbei bietet es sich an, dass die Oberschicht aus einer Schichtung von Oberflächenschicht, Schaumschicht sowie einer zur Hohlraumschicht hin angrenzenden Trennschicht besteht. Hierbei ist die Trennschicht vorzugsweise luftdurchlässig ausgeführt. D.h., es kann sich hierbei um eine siebförmige Schicht handeln bzw. eine mit Löchern perforierte Platte. Der große Vorteil hiervon ist, dass der Wärmeübergang von der Hohlraumschicht zu dem Fahrzeuginnenraum hierdurch deutlich verbessert wird, da insbesondere der Wärmeaustausch zu der vorzugsweise porösen, luftdurchlässigen Schaumschicht erleichtert wird und somit ein sehr großflächiges und wenig träges Aufheizen bzw. Kühlen nicht nur der fahrzeuginnenraumseitigen Oberfläche der Wandstruktur sondern auch des gesamten Fahrzeuginnenraums möglich wird.

## Patentansprüche

1. Wandstruktur (1), insbesondere zur Verwendung als Instrumententafel für KraftfahrzeugInnenräume, wobei diese aus einer Schichtung von Oberschicht (3), Hohlraumschicht (4) und Unterschicht (5) besteht, die Oberschicht zum Kraftfahrzeug-Innenraum hin orientiert ist und die Hohlraumschicht so an ein Belüftungssystem angeschlossen ist, dass Wärmeenergie mittels Luftstrom aus der Oberschicht ableitbar oder zu dieser zuführbar ist, **dadurch gekennzeichnet, dass** die Oberschicht eine zur Hohlraumschicht hin angrenzende, luftdurchlässige Trennschicht (3.3) aufweist.

2. Wandstruktur nach Anspruch 1, **dadurch gekennzeichnet, dass** die Oberschicht aus einer Schichtung von Oberflächenschicht (3.1), Schaumschicht (3.2) sowie der zur Hohlraumschicht (4) hin angrenzenden Trennschicht (3.3) besteht.

3. Wandstruktur nach Anspruch 2, **dadurch gekennzeichnet, dass** die Oberflächenschicht (3.1) aus einer Kunststoff-Slushhaut, einer Kunststoff-Gieshaut und/oder Leder besteht.

4. Wandstruktur nach einem der Ansprüche 2 oder 3, **dadurch gekennzeichnet, dass** die Schaumschicht (3.2) aus Polyurethan-Schaum besteht.

5. Wandstruktur nach einem der Ansprüche 2 bis 4, **dadurch gekennzeichnet, dass** die Trennschicht (3.3) aus Kunststoff und/oder Metall besteht.

6. Wandstruktur nach einem der vorhergehenden Ansprüche, **dadurch gekennzeichnet, dass** Oberschicht (3) und Unterschicht (5) durch Stege (6) verbunden sind.

7. Wandstruktur nach einem der vorhergehenden Ansprüche, **dadurch gekennzeichnet, dass** die Unterschicht (5) aus Kunststoff, Holz und/oder Metall besteht.

8. Wandstruktur nach einem der vorhergehende Ansprüche, **dadurch gekennzeichnet, dass** die Unterschicht (5) auf der von der Hohlraumschicht fortweisenden Seite mit einer Isolationsschicht (5.2) bedeckt ist.

9. Wandstruktur nach einem der vorhergehenden Ansprüche, **dadurch gekennzeichnet, dass** das Belüftungssystem die Klimaanlage eines Kraftfahrzeugs ist.

10. Wandstruktur nach einem der vorhergehenden Ansprüche, **dadurch gekennzeichnet, dass** die Wandstruktur (1) zwischen 6 und 12 mm dick ist.

11. Wandstruktur nach einem der vorhergehenden Ansprüche, **dadurch gekennzeichnet, dass** diese Teil einer Instrumenten-Tafel, eines Bodens, einer Decke, Seitenteilen oder einer Stirnwand eines Kraftfahrzeuges ist.

12. Verfahren zum Herstellen einer Wandstruktur nach einem der Ansprüche 1 bis 11, wobei Unter- (5) und Oberschicht (3) voneinander beabstandet so miteinander verbunden werden, dass zwischen diesen eine Hohlraumschicht (4) zur Luftführung verbleibt, **dadurch gekennzeichnet, dass** eine zur Oberschicht gehörende luftdurchlässige Trennschicht (3.3) derart angeordnet wird, dass diese zur Hohlraumschicht hin angrenzend ist.

13. Verfahren nach Anspruch 12, **dadurch gekennzeichnet, dass** die Beabstandung von Unter- (5) und Oberschicht (3) durch zu der Ober- und/oder Unterschicht gehörende Stege (6) erfolgt.

14. Verfahren nach einem der Ansprüche 12 oder 13, **dadurch gekennzeichnet, dass** die Oberschicht (3) zunächst durch Ausschäumung des Bereichs zwischen einer Oberflächenschicht (3.1) und einer Trennschicht (3.3) unter Bildung der Oberschicht erfolgt, wobei Oberflächenschicht und Trennschicht vor dem Ausschäumungsvorgang beabstandet in einem Ausschäumungswerkzeug eingelegt werden.

15. Verfahren nach einem der Ansprüche 12 bis 14, **dadurch gekennzeichnet, dass** die Trennschicht (3.3) vor dem Fügen von Ober- und Unterschicht perforiert wird.

## Claims

1. Wall structure (1), particularly for the use as instrument panels for vehicle interiors, consisting of a layering of upper layer (3), cavity layer (4) and lower layer (5), with the upper layer being oriented towards the vehicle interior and the cavity layer being connected with a ventilation system in a way that heat energy can be deducted from the upper layer or fed to it via air flow, **characterised in that** the upper layer has a separation layer (3.3) that is permeable to air and that adjoins the cavity layer.

2. Wall structure according to claim 1, **characterised in that** the upper layer consists of a layering of surface layer (3.1), foam layer (3.2) as well as the separation layer (3.3) that adjoins the cavity layer (4).

3. Wall structure according to claim 2, **characterised in that** the surface layer (3.1) consists of a plastic slush skin, a plastic cast skin and/or leather.

4. Wall structure according to one of the claims 2 or 3, **characterised in that** the foam layer (3.2) consists of polyurethane foam.

5. Wall structure according to one of the claims 2 to 4, **characterised in that** the separation layer (3.3) consists of plastic and/or metal.

6. Wall structure according to one of the previous claims, **characterised in that** the upper layer (3) and the lower layer (5) are connected via bars (6).

7. Wall structure according to one of the previous claims, **characterised in that** the lower layer (5) consists of plastic, wood and/or metal.

8. Wall structure according to one of the previous claims, **characterised in that** the lower layer (5) is covered with an insulation layer (5.2) on the side that is opposed to the cavity layer.

9. Wall structure according to one of the previous claims, **characterised in that** the ventilation system is the air conditioner of a vehicle.

10. Wall structure according to one of the previous claims, **characterised in that** the wall structure (1) is between 6 and 12 mm thick.

11. Wall structure according to one of the previous claims, **characterised in that** it is part of an instrument panel, a floor, a ceiling, side parts or a front wall of a vehicle.

12. Procedure for the production of a wall structure according to one of the claims 1 to 11, with the lower layer (5) and the upper layer (3) being spacedly connected with one another in a way that a cavity layer (4) for air passage remains, **characterised in that that** a separation layer (3.3) permeable to air belonging to the upper layer is arranged in a way that it adjoins the cavity layer.

13. Procedure according to claim 12, **characterised in that** the spacing between the lower layer (5) and the upper layer (3) is realised through bars (6) that belong to the upper layer and/or the lower layer.

14. Procedure according to one of the claims 12 or 13, **characterised in that** the upper layer (3) is first realised through the foaming of the area between a surface layer (3.1) and a separation layer (3.3), thus forming the upper layer, with the upper layer and the separation layer being spacedly inserted into a foaming tool before the foaming process.

15. Procedure according to one of the claims 12 to 14, **characterised in that** the separation layer (3.3) is perforated before the upper and the lower layer are connected.

## Revendications

1. Structure murale (1), particulièrement pour l'utilisation comme planche de bord pour véhicules-automobiles, consistant d'une stratification d'une couche supérieure (3), une couche de cavité (4) et une couche inférieure (5), la couche supérieure étant orientée à l'intérieure du véhicule automobile et la couche de cavité étant connectée à une système de ventilation de façon qu'énergie calorifique peut être déversée de la couche supérieure ou reversée à elle, **caractérisée en ce que** la couche supérieure a une couche de séparation poreuse (3.3) qui avoisine la couche de cavité.

2. Structure murale selon la revendication 1, **caractérisée en ce que** la couche supérieure consiste d'une stratification d'une couche de surface (3.1), une couche mousseuse (3.2) ainsi que la couche de séparation (3.3) qui avoisine la couche de cavité (4).

3. Structure murale selon la revendication 3, **caractérisée en ce que** la couche supérieure (3.1) consiste d'un peau de slush plastifié, d'un peau coulé et/ou de cuir.

4. Structure murale selon une des revendications 2 ou 3, **caractérisée en ce que** la couche moussée (3.2) consiste de mousse de polyuréthane.

5. Structure murale selon une des revendications 2 à 4, **caractérisée en ce que** la couche de séparation (3.3) consiste de matière plastique ou de métal.

6. Structure murale selon une des revendications préalables, **caractérisée en ce que** la couche supérieure (3) et la couche inférieure (5) sont connectées par des traverses (6).

7. Structure murale selon une des revendications préalables, **caractérisée en ce que** la couche inférieure consiste de matière plastique, de bois et/ou de métal.

8. Structure murale selon une des revendications préalables, **caractérisée en ce que** la couche inférieure (5) est couverte d'une couche d'isolation (5.2) au côté qui oppose la couche de cavité.

9. Structure murale selon une des revendications préalables, **caractérisée en ce que** le système de ventilation est l'air conditionné d'un véhicule automobile.

10. Structure murale selon une des revendications préalables, **caractérisée en ce que** la structure murale (1) est entre 6 et 12 mm fort.

11. Structure murale selon une des revendications préalables, **caractérisée en ce qu'**elle fait partie d'un planche de bord, d'un fond, d'un plafond, de pièces latérales ou du front d'un véhicule automobile.

12. Procédure pour la production d'une structure murale selon une des revendications 1 à 11, la couche inférieure (5) et la couche supérieure (3) étant connectées avec éspacement de facon que reste une couche de cavité (4) entre elles pour le passage d'air, **caractérisée en ce qu'**une couche de séparation poreuse (3.3) qui appartient à la couche supérieure est arrangée de facon qu'elle avoisine la couche de cavité.

13. Procédure selon la revendication 12, **caractérisée en ce que** l'éspacement entre la couche inférieure (5) et la couche supérieure (3) s'effectue par des traverses (6) qui appartiennent à la couche supérieure et/ou la couche supérieure.

14. Procédure selon une des revendications 12 ou 13, **caractérisée en ce que** la couche supérieure (3) s'effectue d'abord par le moussage de la région entre une couche de surface (3.1) et une couche de séparation (3.3), formant la couche supérieure, la couche de surface et la couche de séparation étant mises avec éspacement dans un outil de moussage avant le procès de moussage.

15. Procédure selon une des revendications 12 à 14, **caractérisée en ce que** la couche de séparation (3.3) est perforée avant que la couche supérieure et la couche inférieure soient réunies.
